# EUROPÄISCHE PATENTSCHRIFT

(11) **EP 3 986 636 B1**
(45) Veröffentlichungstag und Bekanntmachung des Hinweises auf die Patenterteilung: **15.11.2023**
(21) Anmeldenummer: 20733613.2
(22) Anmeldetag: 18.06.2020
(51) Int. Cl.: B22D 35/04, B22C 9/08, B22D 11/103, F27D 3/14, C04B 35/053, C04B 35/14, C04B 35/057, C04B 35/46, C04B 35/117, C04B 35/119, C04B 35/488, C04B 35/505, C04B 35/626, C04B 38/06, C04B 111/00

(54) **GIESSRINNE ZUM TRANSPORT EINER SCHMELZE SOWIE VERFAHREN ZUM HERSTELLEN DER GIESSRINNE**
RUNNER FOR TRANSPORTING A MOLTEN MATERIAL AND METHOD FOR PRODUCING SAID RUNNER
CANAL DE COULÉE DESTINÉ À TRANSPORTER UNE MATIÈRE FONDUE ET PROCÉDÉ DE FABRICATION DU CANAL DE COULÉE

(30) Priorität: 21.06.2019 DE 102019116855; 24.06.2019 DE 102019116989
(43) Veröffentlichungstag der Anmeldung: 27.04.2022
(73) Patentinhaber: Schunk Kohlenstofftechnik GmbH, 35452 Heuchelheim (DE)
(72) Erfinder: KOLBE, Philipp, 35394 Gießen (DE); LAUER, Andreas, 35274 Kirchhain (DE); ZULAUF, Lukas, 35440 Linden (DE); SPENLER, Anna-Lena, 35452 Heuchelheim (DE); WAMSER, Thomas, 35452 Heuchelheim (DE)
(74) Vertreter: Stoffregen, Hans-Herbert
(86) Internationale Anmeldenummer: PCT/EP2020/066873
(87) Internationale Veröffentlichungsnummer: WO 2020/254463

(56) Entgegenhaltungen:
- DE-A1-102013 104 416
- US-A1- 2006 283 570
- US-A1- 2014 210 144
- US-A1- 2017 106 441
- US-B1- 7 036 555

## Beschreibung

Die Erfindung bezieht sich auf eine Gießrinne zum fließenden Transport einer Schmelze, insbesondere Metallschmelze, insbesondere Nichteisenmetallschmelze, insbesondere einer aus Aluminium bestehenden oder Aluminium enthaltenden Schmelze.

Entsprechende Gießrinnen werden zum Fördern von schmelzflüssigen Metallen und Metalllegierungen von z.B. einem Schmelztiegel oder einer Warmhaltekammer oder -ofen in eine Gießkammer von z.B. einer Druckgussanlage bzw. einer Gießform benutzt. Der Transport erfolgt auf Grund des Gefälles zwischen Entnahme- und Zielort.

Nach dem Stand der Technik werden üblicherweise Stahlrinnen eingesetzt, die regelmäßig zu schlichten sind, insbesondere mit einer keramischen Suspension, damit insbesondere dann, wenn Aluminiumschmelzen oder Aluminiumlegierungsschmelzen transportiert werden, eine Reaktion zwischen Schmelze und Stahlrinne unterbleibt, wodurch eine Verunreinigung der Schmelze, ein durch Anhaftungen bedingtes verschlechtertes Fließverhalten der Schmelze und eine Schädigung der Gießrinne durch sukzessives Auflösen erfolgen würde.

Auch sind Rinnen bekannt, die mit feuerfesten Materialien ausgekleidet sind. Bekannt sind auch Stahlrinnen, die mit Isolationsmaterial gedämmt oder optional beheizt sind. Rinnen aus feuerfester Keramik gelangen gleichfalls zur Anwendung.

Nachteil der bekannten Rinnen ist es, dass bei Vorhandensein einer Schlichte diese üblicherweise nach ca. 10 bis 500 Abgüssen (abhängig von der Legierungszusammensetzung, Temperatur, Schlichtezusammensetzung und Art der Prozessierung) erneuert werden muss; denn durch die unterschiedlichen Wärme- und Ausdehnungskoeffizienten von Schlichte und Stahlrinne, sowie Haftfestigkeit und Verschleißbeständigkeit der Schlichte platzt diese häufig ab. Dies führt zudem zu Verunreinigungen der Schmelze.

Ist eine neue Schlichte aufzutragen, müssen alte Schlichtereste sowie metallische Anhaftungen (erstarrtes Material) entfernt werden. Hierzu müssen alle Bereiche des Gießkanals zugänglich sein.

Beim Transport von Aluminiumschmelze ist festzustellen, dass diese häufig an der Gießrinne anhaftet, so dass auf Grund einer sich ausbildenden Gusshaut ein Aufstau bis hin zum Verschluss der Gießrinne entstehen kann.

Durch die großen Wandstärken und Volumina sowie der hohen thermischen Leitfähigkeit und des ungünstigen Wärmeübergangskoeffizienten der zum Einsatz gelangenden Materialien! Materialkombination erfolgt durch die Rinne ein Wärmeentzug der Schmelze, so dass eine entsprechend höhere Ausgangstemperatur der Schmelze erforderlich ist, um den Wärmeentzug zu kompensieren. Hierdurch ist ein höherer Energieeinsatz mit einer gegebenenfalls erforderlichen Überhitzung des Warmhalteofens erforderlich. Gleichzeitig ergibt sich der Nachteil, dass die gewünschte geringe Gusstemperatur zur Erzielung verbesserter Gussqualität (u.a. mechanische Eigenschaften, bessere Filtrierungsmöglichkeiten) nicht gehalten werden kann. Auch ist häufig ein Vorheizen der Gießrinne erforderlich.

Durch die Reaktion mit einer Stahlrinne, Abtrag und Mittransport der Schlichte (low density inclusions, LDI- Einschlüsse) wird die Schmelze verunreinigt.

Da die Rinnen üblicherweise offen sind, erfolgt eine Oxidation der Schmelze mit der Umgebungsluft, wodurch die Gussqualität verringert wird.

Insbesondere hinsichtlich Gießrinnen aus feuerfestem Material ergibt sich der Nachteil, dass bei großvolumigen Gießrinnen ein hoher Bauraum erforderlich ist. Auch sind starke geometrische Einschränkungen gegeben.

Ferner sind die mechanischen Eigenschaften des feuerfesten Materials häufig unzureichend. Ein Vorwärmen ist erforderlich. Auch ergeben sich Nachteile bei der Montage, da diese sehr zeitaufwendig ist. Eine Demontage ist häufig nicht möglich. Ferner hat sich gezeigt, dass feuerfestes Material zur Bildung von Ausbrüchen oder Rissen neigt. Letzteres führt zu Fehlstellen im Bauteil.

Der EP 3 034 640 A1 ist Verbundwerkstoff aus Metall und Keramik zu entnehmen, der als Auskleidung für eine Rinne geeignet ist, über die Aluminiumschmelze transportiert wird.

Gegenstand der EP 2 730 552 A1 ist ein keramischer Kompositwerkstoff, der für Gießrinnen geeignet ist.

Die WO 2016/016388 A1 bezieht sich auf einen oxidfaserverstärkten oxidkeramischen Verbundwerkstoff in Form von Prepregs.

Prepregs werden auch in der DE 10 2010 055 221 A1 beschrieben.

Die DE 10 2013 104 416 A1 bezieht sich auf monolithische Keramiken mit Gewebegitter-Verstärkung, die als Graphitverstärkung für Schmelztiegel und Schmelzrinnen verwendet werden können.

Die EP 1 734 024 A1 beschreibt einen oxidkeramischen Faserverbundwerkstoff, der für Gasturbinen oder Flugzeugtriebwerke eingesetzt werden kann.

In der US 2006/0283570 A1 wird ein für eine Aluminiumgießanlage bestimmter Steuerdorn beschrieben, der aus einem oxidkeramischen Werkstoff besteht.

Eine Gießrinne nach der US 2017/106441 A1 weist einen aus feuerfestem Material bestehenden Trogkörper auf, der außenseitig von einer aus Glasfasern bestehenden Schicht ummantelt ist.

Eine Gießrinne nach der US 7,036,555 B1 ist innenseitig mit einem Glasfasergewebe ausgekleidet.

Gegenstand der US 2014/210144 A1 ist ein Entgasungsrohr, das in einen Diffusor übergeht, der aus einem Verbundmaterial bestehen kann, das Gewebeschichten aufweist, die in einer keramischen Matrix eingebettet sind.

Aufgabe der vorliegenden Erfindung ist es, eine Gießrinne der zuvor genannten Art sowie ein Verfahren zur Herstellung einer solchen derart weiterzubilden, dass im Vergleich zum Stand der Technik Verunreinigungen der Schmelze vermieden bzw. im Vergleich zum Stand der Technik reduziert werden.

Auch soll im Vergleich zum Stand der Technik die Standzeit erhöht werden. Eine energetisch günstige Nutzung soll ermöglicht sein, insbesondere die Möglichkeit bestehen, die Temperatur der Schmelze derart einzustellen, dass die mechanischen Eigenschaften verbessert werden. Auch soll eine einfache Montage und Demontage möglich sein.

Zur Lösung der Aufgabe sieht die Erfindung im Wesentlichen vor, dass die Gießrinne aus einem oxidfaserverstärkten oxidkeramischen Verbundwerkstoff besteht oder diesen enthält, und dass die Gießrinne zumindest abschnittsweise, insbesondere in Längsachse der Gießrinne gekrümmt oder gebogen verlaufende Bereiche, aus mit Schlicker imprägnierten Prepregs hergestellt ist, die ein aus den Fasern gebildetes Rund- oder Flachgeflecht aufweisen, welches radial zur Längsachse der Gießrinne derart gewickelt ist, dass Hauptproduktionsrichtung des Rund- oder Flachgeflechts einen Winkel γ zur Längsachse der Gießrinne mit 60° ≤ γ < 90° einschließt.

Rundgeflecht kann auch als Geflechtschlauch bezeichnet werden.

Insbesondere enthält der Verbundwerkstoff oxidkeramische Fasern, gebildet aus vorzugsweise zumindest einem Material aus der Gruppe Al₂O₃, SiO₂, ZrOz, Y₂O₃, TiO₂, CaO, MgO, Y₂O₃ stabilisiertes ZrO₂.

Bevorzugterweise enthält der Verbundwerkstoff eine oxidkeramische Matrix, gebildet aus vorzugsweise zumindest einem Material aus der Gruppe Al₂O₃, SiO₂, ZrO₂, Y₂O₃, TiO₂, CaO, MgO, ZrO₂ (tetragonal stabilisiert, teilstabilisiert, vollstabilisiert). Bevorzugterweise sollten die Matrix und die Fasern aus gleichem oxidkeramischem Material oder gleichen oxidkeramischen Materialien bestehen oder dieses bzw. diese enthalten.

Des Weiteren kann sich die Erfindung dadurch auszeichnen, dass das Metall im Verbundwerkstoff und das der Schmelze oder Hauptbestandteil der Schmelze gleich ist. Bevorzugterweise ist vorgesehen, dass die Matrix und die Fasern aus Al₂O₃ bestehen oder als Hauptbestandteil enthalten.

Erfindungsgemäß wird eine Gießrinne zum fließenden Transportieren einer Schmelze aus oxidfaserverstärkter Oxidkeramik mit poröser Matrix vorgeschlagen, wodurch die

Möglichkeit gegeben ist, komplexe Geometrien auszubilden, ohne dass Nachteile in der Funktion gegeben sind.

Insbesondere besteht dabei die Möglichkeit, den üblicherweise gradlinig verlaufenden Abschnitt, der eine Länge von z.B. zwischen 50mm und 2000mm aufweisen kann, rohrförmig, also geschlossen auszubilden, so dass eine Oxidation der Schmelze reduziert bzw. vermieden, sowie der Wärmeverlust minimiert wird. Eine diesbezügliche Möglichkeit bietet der Stand der Technik nicht, sofern die Gießrinnen geschlichtet sind.

Das Endstück, also der Ausgussbereich kann den Anforderungen entsprechend geformt sein, um ein schnelles, zielorientiertes und beruhigtes Dosieren zu ermöglichen.

Dabei kann der lichte Querschnitt in Längsachsenrichtung der Gießrinne im erforderlichen Umfang und den Anforderungen entsprechend variieren.

Insbesondere die Gestaltung des Ausgussabschnitts mit einem gewünschten Krümmungsradius wird auf Grund der erfindungsgemäßen Lehre dadurch ermöglicht, dass die oxidkeramischen Fasern in Form eines vorimprägnierten Radialgeflechts (Rundgeflechts) oder Flachgeflechts als Prepreg vorliegen. Dabei ist insbesondere vorgesehen, dass dann, wenn das Prepreg eine Schlauchform aufweist, das Rundgeflecht zu einer ebenen bandförmigen Struktur zusammengepresst wird. Zug in Längsrichtung (Hauptproduktionsrichtung des Geflechts) führt bei den Geflechten zu einer Querschnittsverringerung bzw. Verringerung der Breite. Der Winkel zwischen Faserroving und Hauptproduktionsrichtung wird geringer. Druck in Längsrichtung führt zu einer Stauchung und Querschnittsvergrößerung bzw. Erhöhung der Breite des Bandes.

Bei der Herstellung der Prepregs gelangt insbesondere ein wasserbasierter Schlicker zum Einsatz mit bevorzugt organischen Additiven z.B. Polyole, Polyvinylalkohole oder Polyvinylpyrrolidone, Dispersionsbinder, bevorzugt Polyole und Polyvinylalkohole.

Der Anteil der keramischen Partikel kann 10 Vol.-% bis 50 Vol.-%, insbesondere 20 Vol.- % bis 40 Vol.-%, bezogen auf das Gesamtvolumen des Schlickers betragen.

Als Oxidkeramik kommt sowohl für die keramischen Partikel als auch für die Fasern insbesondere ein Material aus der Gruppe Al₂O₃, SiO₂, ZrO₂, Y₂O₃, TiO₂, CaO, MgO, ZrO₂ (tetragonal stabilisiert, teilstabilisiert, vollstabilisiert) in Frage.

Der Schlicker kann zumindest 10 Gew.-% bis 20 Gew.-%, vorzugsweise zumindest 24 Gew.-%, z. B. 21 Gew.-% bis 35 Gew.-% Glycerin bezogen auf das Gesamtgewicht der keramischen Partikel enthalten.

Ein entsprechendes Prepreg mit Rund- oder Flachgeflechten als Verstärkungsarchitektur wird auf ein die Innengeometrie des Ausgussbereichs vorgebenden Werkzeug radial gewickelt. Im Falle des Rund- oder Radialgeflechts wird die schlauchförmige Faserarchitektur zusammengepresst um ein Band zu erhalten. Insbesondere sind Überlappungen beim Wickeln der Bänder vorgesehen. Zudem können mehrere Wickellagen übereinandergelegt werden. Abschließend erfolgt eine Verdichtung (z.B. mittels Autoklav).

Beim Flechtprozess werden die Rovings ineinandergeschlungen. Rund- oder Flachgewebe werden vorwiegend auf einer Radialwickelmaschine hergestellt. Das Flechtbett enthält mehrere 100 Klöppel, welche die Faserrovings speichern. Die Klöppel bewegen sich geordnet auf sinusförmigen Bahnen hälftig in entgegengesetzten Richtungen. Dabei Verkreuzen sich die Rovings und werden in Hauptproduktionsrichtung abgezogen. Bei Rund- oder Radialgeflechten beschreiben die Klöppel eine umlaufende Bahn und es ergibt sich ein Schlauch, bei Flachgeflechten gibt es einen Umkehrpunkt und ein Band entsteht. Die Anzahl an verwendeten Klöppeln bestimmt den Umfang des Schlauchs bzw. die Breite des Bands. Damit die Geflechte eine hohe Drapierbarkeit aufweisen und in Hauptproduktionsrichtung dehn- und stauchbar sind, werden keine Stand- oder Stehfäden eingeflochten. Stehfäden verlaufen parallel zur Hauptproduktionsrichtung und werden durch stationäre Klöppel eingebracht.

Zur Längsachse des gebogenen Ausgussabschnitts der Gießrinne schließen die Rovings nach dem Ablegen des insbesondere biaxialen Geflechts einen Winkel β1, β2 mit vorzugsweise 35° ≤ | β1,β2 | ≤ 65° ein. Durch die Ausrichtung der Rovings des Rund- oder Flachgeflechts zu dessen Längsachse ist ein problemloses Dehnen und Stauchen möglich, so dass eine optimale Anpassung an den Verlauf des gekrümmten Werkzeugs zur Bildung des gekrümmten Ausgussabschnitts der Gießrinne sichergestellt ist.

Die zusammengepressten schlauchförmigen Rund- oder Radialgeflechte sind derart dimensioniert, dass im zusammengepressten Zustand eine Breite zwischen 10mm bis 200mm, insbesondere im Bereich zwischen 15mm und 80mm gebildet ist. Die Flachgeflechte haben ebenso Breite zwischen 10mm bis 200mm. Die Geflechte setzten sich bevorzugt aus 30 bis 300 Rovings zusammen.

Selbstverständlich können entsprechende Prepregs auch zur Bildung des gradlinigen Abschnitts des Gießkanals eingesetzt werden. Auch kann die Herstellung im Radialwickelprozess erfolgen. Dabei kann auf Stoß oder überlappend gewickelt werden. Ebenso ist es möglich, dass die Rundgeflechte den geradlinigen Abschnitt umhüllen, d.h., das Rundgeflecht wird also nicht zusammenpresst. Im Weiteren können auch Prepregs aus flächigem Gewebe oder Gelege zum Einsatz gelangen.

Insbesondere in einem geradlinigen Abschnitt der Gießrinne, in dem die Längsachse folglich geradlinig und nicht gebogen verläuft, kann der Winkel γ, der den Winkel zwischen Hauptproduktionsrichtung und Gießrinnenachse beschreibt, 0° betragen.

Die Wandstärke der Gießrinne liegt bevorzugterweise im Bereich zwischen 1mm und 20mm, insbesondere zwischen 1mm und 3mm. Das Gewicht der Gießrinne kann zwischen 0,2kg und 20kg, insbesondere zwischen 0,3kg und 5kg liegen.

Die einzelnen Fasern der insbesondere als Faserbündel (Rovings) eingesetzten Faserverstärkung sollten einen Durchmesser zwischen 5µm und 20µm, insbesondere zwischen 10µm und 12µm aufweisen. Die Dichte sollte vorzugsweise zwischen 2,0g/cm³ und 6,0g/cm³ liegen.

Kann die offene Porosität, also die Hohlräume im Material der Gießrinne, die untereinander und mit der Umgebung in Verbindung stehen, im Bereich zwischen 20% und 40% oder zwischen 20% und 45% liegen, so ist der Bereich zwischen 27% und 32% bevorzugt anzugeben. Durch die offene Porosität wird eine geringe Wärmeleitfähigkeit von insbesondere weniger als 10 W/mK erreicht.

Die Dichte der Gießrinne ist vorzugsweise im Bereich zwischen 2,0g/cm³ und 6,0g/cm³, bevorzugterweise zwischen 2,5g/cm³ und 3,2g/cm³, anzugeben.

Auf Grund des Einsatzes von Prepregs mit Rund- oder Flachgeflecht kann die Gießrinne eine gewünschte Geometrie aufweisen, wobei problemlos Veränderungen im Querschnitt bzw. der lichten Weite des die Schmelze aufnehmenden Bereichs der Gießrinne erfolgen können.

Auch können mit der Gießrinne Komponenten, wie Stromabweiser für Schmelze oder Entlüftungsvorrichtungen, integriert und aus demselben oxidfaserverstärkten oxidkeramischen Material wie die Gießrinne gefertigt werden.

Ferner ist eine belastungsgerechte Auslegung der Faserverstärkungen möglich, insbesondere im Auslassbereich.

Um ein günstiges Benetzungsverhalten der Gießrinne zu erzielen, ist insbesondere vorgesehen, dass die Oxidkeramik der Matrix als Zusatz ZrO₂ oder mit Y₂O₃ stabilisiertes ZrO₂ enthält, dessen Gewichtsanteil vorzugsweise 5 Gew.-% bis 30 Gew.-% der Oxidkeramik der Matrix, insbesondere 12 Gew.-% bis 25 Gew.-% beträgt.

Insbesondere zeichnet sich die Gießrinne auch dadurch aus, dass die offene Porosität der Gießrinne zwischen 27 % und 32 % liegt.

Ferner sollte die Dichte ρ der Fasern betragen 2 g/cm³ < ρ < 6 g/cm³ und/oder der Faserdurchmesser betragen 5 µm bis 20 µm, insbesondere 10 µm bis 12 µm.

Erwähntermaßen zeichnet sich die Erfindung dadurch aus, dass die Gießrinne einen insbesondere schmelzauslassseitig verlaufenden gebogenen Abschnitt aufweist, der aus zumindest einem, insbesondere mehreren mit die oxidkeramische Matrix bildenden Partikel enthaltendem Schlicker imprägnierten Prepregs hergestellt ist, wobei im Prepreg die oxidkeramischen Fasern in Form eines Rund- oder Flachgeflechts vorliegen, das frei von Steh- oder Standfäden ist, um das Stauchen bzw. Dehnen in Hauptproduktionsrichtung des Geflechts zu ermöglichen. Im Außenbereich des Bogens (Extrados) werden die Geflechte daher verbreitert, im Innenbereich (Intrados) wird die Gewebebreite reduziert. Zur Längsrichtung der Gießrinne beschreiben die insbesondere als Rovings vorliegenden oxidkeramischen Fasern einen Winkel von vorzugsweise 35° ≤ | β1,β2 | ≤ 65°.

Der Winkel γ zwischen Hauptproduktionsrichtung des insbesondere biaxialen Geflechts und der Gießrinnenlängsachse beträgt in dem gebogenen Abschnitt bevorzugterweise 60° ≤ γ < 90°. Die Fasern des Geflechts schließen zur Hauptproduktionsrichtung einen Winkel α ein, der in Abhängigkeit von der Stauchung bzw. Drehung des Geflechts in dem gebogenen Abschnitt zwischen 25° und 55° liegen sollte.

Insbesondere zeichnet sich die Erfindung auch aus durch ein Verfahren zur Herstellung einer Gießrinne zum fließenden Transport einer Schmelze, wie Metallschmelze, vorzugsweise Nichteisenmetallschmelze, insbesondere Aluminiumschmelze oder einer Aluminium enthaltenden Schmelze, umfassend die Verfahrensschritte
- Imprägnieren einer Anordnung von Rund- oder Flachgeflechten von oxidkeramischen Fasern mit einem oxidkeramische Partikel enthaltenden Schlicker zur Bildung von Prepregs,
- Wickeln oder Legen der Prepregs auf ein Innengeometrie der Gießrinne abbildendes Werkzeug, wobei Hauptproduktionsrichtung des Rund- oder Flachgeflechts eine Winkel γ zur Längsachse des Werkzeugs mit 60°≤ γ < 90° einschließt.
- Trocknen der auf dem Werkzeug abgelegten Anordnung, Entformen oder Teilentformen und Sintern.

Die Anordnung wird nach dem Trocknen von dem Werkzeug entformt oder teilentformt, sodann gesintert und kann ggf. nachbearbeitet werden.

Dabei werden als die Anordnung ein oder mehrere imprägnierte Endlosfaserbündel oder imprägnierte flächige Gebilde, insbesondere Fasergelege, -gewebe oder -geflechte, verwendet.

Insbesondere ist vorgesehen, dass die Anordnung der Fasern bei einer Temperatur zwischen 40 °C und 250 °C, insbesondere zwischen 80 °C und 150 °C getrocknet wird.

Ferner kann die Anordnung der Fasern bei einer Temperatur zwischen 1.000 °C und 1.300 °C, insbesondere zwischen 1.150 °C und 1.250 °C, gesintert werden.

Die Trocknungsdauer ist temperaturabhängig und liegt zwischen 2 h und 48 h, bevorzugt zwischen 12 h und 24 h.

Die Sinterung erfolgt über einen Temperatur-/Zeitverlauf mit verschiedenen Haltestufen und -dauern, wobei die Haltedauer bei Höchsttemperatur zwischen 5 min und 24 h, bevorzugt zwischen 1 h und 12 h liegen sollte.

Zur Bildung eines gebogenen Abschnitts der Gießrinne wird zumindest ein mit einem wasserbasierten oxidkeramische Partikel enthaltenden Schlicker imprägniertes Prepreg auf ein die Innengeometrie des Abschnitts abbildendes Werkzeug gelegt, wobei die oxidkeramischen Fasern als Rund- oder Flachgeflecht in dem Prepreg vorliegen. Die Fasern in Hauptproduktionsrichtung des Rund- oder Flachgeflechts sollten einen Winkel β1,β2 ≠ 0°, 90°, also weder 0° noch 90°, zur Längsachse des Werkzeugs, insbesondere einen Winkel β1,β2 mit 35° ≤ | β1,β2 | ≤ 65°, einschließen.

Ferner sollten die Prepregs im gekrümmten Bereich der Gießrinne derart angeordnet werden, dass die Hauptproduktionsrichtung des Geflechts der Prepregs zu der Längsachse der herzustellenden Gießrinne einen Winkel α mit 60° ≤ α < 90° einschließt.

Insbesondere werden mehrere Prepregs auf dem Werkzeug aufeinandergelegt und als Einheit an dessen Form angedrückt und sodann verdichtet. Dabei ist vorgesehen, dass der Bereich des Prepregs, der entlang des Innenbogens verläuft, gestaucht (Breite des Prepregs verringert) wird und der im Bereich des Außenbogens gedehnt (Breite des Bands wird erhöht) wird.

Dadurch, dass Rund- oder Flachgeflechte zum Einsatz gelangen, die im Bogen auf das die Gießrinne abbildende Werkzeug radial umwickeln, kann durch Stauchen bzw. Ziehen des Rund- oder Flachgeflechts in Hauptproduktionsrichtung die gewünschte Wandstärke erzielt werden, da starke Aufdickungen, insbesondere im Innenbogensegment, vermieden werden.

Erfindungsgemäß werden Rund- oder Flachgeflechte ohne Steh- oder Standfäden eingesetzt. Eine hervorragende Drapierbarkeit stellt sich ein. Die Geflechte werden auf Radialwickelmaschinen produziert.

Erwähntermaßen besteht die Möglichkeit, die Breite des geflochtenen Prepregbands im Bogenbereich zu verändern, so dass eine gleichmäßige bzw. gleichmäßigere Wandstärke realisiert wird.

Nach Ablage der Prepregs auf das Werkzeug verlaufen die Fasern in unterschiedlichen Orientierungen, so dass eine günstige Verstärkungsarchitektur erzielt wird. Ein aufwendiges Zuschneiden von Prepregabschnitten aus Geweben ist dabei nicht erforderlich.

Nach Ablegen der Prepregs erfolgt in gewohnter Weise ein Weiterprozessieren, d.h. Trocknen, Entformen bzw. Teilentformen und Sintern und gegebenenfalls Nachbearbeiten.

Die keramische Faserverstärkung inklusive der porösen keramischen Matrix führt zu einer erheblichen Steigerung von Festigkeit und Duktilität (Schadenstoleranz), die beispielsweise deutlich über der von feuerfesten teil- oder vollkeramischen Gießrinnen liegt. Dies führt zu einem quasiduktilen Materialverhalten, wodurch Sprödbruch vermieden wird und Stöße oder ähnliche mechanische Belastungen als unkritisch einzustufen sind.

Auch zeichnet sich der Verbundwerkstoff durch ausgezeichnete und für die Anwendung insbesondere für die Anwendung Aluminiumguss ausreichende Thermoschockbeständigkeit und Beständigkeit gegenüber Hochtemperaturermüdung aus, Vorteile, die Gießrinnen aus monolithischer Keramik nicht bieten.

Die inhärente Zusammensetzung von Fasern und Matrix aus gleichem Oxid, wie Al₂O₃, führt dazu, dass z.B. bei Aluminiumschmelzen und seinen Legierungen eine Korrosion des Werkstoffs der Gießrinne verhindert wird und ein überaus günstiges Benetzungsverhältnis auftritt. Dabei können Zusätze von z.B. Zirkoniumoxid vorteilhaft sein.

Daher zeichnet sich die Erfindung auch dadurch aus, dass der Gewichtsanteil des Zusatzes bzw. des Additivs Zirkoniumoxid, das gegebenenfalls mit Yttriumoxid verstärkt ist, 5% bis 30%, insbesondere 12% bis 25% in Gew.-%, der Oxidkeramik der Matrix beträgt.

Das günstige Benetzungsverhalten verbessert das Fließverhalten der Schmelze, insbesondere Aluminiumschmelze, ein Aufstau von Gusshaut bis hin zum Verschluss bzw. Kaltlauf wird unterbunden.

Der Verschleiß, der Reinigungsaufwand und durch schwer entfernbare Anhaftungen entstehenden Beschädigungen werden reduziert.

Sollte es durch prozessbedingte Fehlerursachen zu einem Kaltlauf und einem Verschluss der Gießrinne kommen, so kann dann, wenn eine geschlossene Bauweise vorgesehen ist, durch erneutes Erwärmen der Gießrinne und Verflüssigen des Materials über die Schmelztemperatur des erstarrten Materials eine vollständige Reinigung, ggf. mit Druckluftunterstützung, erfolgen.

Aufgrund der Zusammensetzung des Verbundwerkstoffs insbesondere dann, wenn das Metall der Oxidkeramik gleich dem Metall der Schmelze oder Hauptbestandteil der Metalle der Schmelze ist, kommt es zu keiner Verunreinigung der Schmelze durch angelöste metallische Verbindungen oder keramische Partikel. Erfolgt eine geschlossene Bauweise, wird die Oxidation der Schmelze reduziert. Dies äußert sich in einer Verbesserung der Gussqualität. Diese Vorteile werden insbesondere dann offensichtlich, wenn eine Aluminiumschmelze in einer Gießrinne transportiert wird, deren Fasern und Matrix aus Aluminiumoxid, ggf. mit Zusatz ZrO₂, besteht.

Weiterhin führen "aggressive" alkalihaltige Aluminiumschmelzlegierungen aufgrund der erwähnten Werkstoffzusammensetzung zu keiner Veränderung in der Gießrinne, d. h. keine Masse- und Gefügeänderung, wodurch der Verschleiß reduziert und die Lebensdauer erheblich erhöht werden kann.

Bei einer geschlossenen Bauweise der Gießrinne und die mit der Faserverstärkung einhergehende Leichtbauweise werden Wärme- und Temperaturisolationseigenschaften stark verbessert. Hierdurch bedingte geringere Temperaturabfälle in der flüssigen Schmelze bieten neue Möglichkeiten bei der Prozessierung der Schmelzen insbesondere von Aluminiumschmelzlegierungen, insbesondere in Bezug auf niedrigere Gusstemperaturen beziehungsweise von der Erstarrungsmorphologie schwierig verarbeitbarer Legierungen. Überdies wird hierdurch eine Energieeinsparung erzielt.

Es wird eine Formstabilität gegenüber thermischen Zyklen und hohe Festigkeit erzielt, Sprödbrüche treten nicht auf, so dass eine Prozesssicherheit gegeben ist. Der oxidkeramische Faserverbund ist in höchstem Maße thermoschockbeständig.

Sofern die Gießrinne geschlossen ausgeführt ist, erfolgt praktisch keine Reaktion der Schmelze mit der Umgebungsluft (Oxidation wird unterbunden). Durch die Werkstoffzusammensetzung der Gießrinne werden chemische Reaktionen zwischen Werkstoff der Gießrinne und dem schmelzflüssigen Metall unterbunden.

Ein Schlichten ist nicht erforderlich, da ein günstiges Benetzungsverhalten der Schmelze zum Verbundwerkstoff gegeben ist. Hierdurch bedingt kommt es nicht zu Verunreinigungen der Schmelze. Die Gussteilqualität wird im Vergleich zum Stand der Technik verbessert.

Durch die geringe Wandstärke und Dichte ist ein Leichtbaukonzept realisiert, wobei Bohrungen problemlos eingebracht werden können, die für eine Montage bzw. Demontage erforderlich sein können. Durch die mechanischen Eigenschaften der Gießrinne, besonders hinsichtlich Festigkeit und Schadenstoleranz sind ebenso Klemmverbindungen problemlos möglich.

Die Rinne, ungeachtet einer geschlossenen Bauweise, kann abnehmbare Öffnungen aufweisen, um die Schmelze zu kontrollieren.

Durch das geringe Bauteilvolumen ist der Temperaturverlust gering, so dass ein sogenanntes "Einfrieren" der Schmelze nicht stattfindet. Dies wiederum führt dazu, dass eine Überhitzung des Schmelzofens nicht erforderlich ist, d. h., der Energieeinsatz wird verringert und die Gusstemperatur reduziert.

Insbesondere ist vorgesehen, dass eine entsprechende Gießrinne bestimmt ist, um Nichteisenmetallschmelzen zu prozessieren, die aus Al, Si, Mg, Cu, Zn, Sn, Ti, Na, Sr, B bestehen oder diese enthalten, wobei insbesondere Aluminiumschmelzen bzw. Aluminiumlegierungsschmelzen zu erwähnen sind.

Hervorzuheben ist des Weiteren, dass keine zusätzliche Beschichtung zum Schutz vor Schmelzen notwendig ist. Die Gießrinne kann beschichtungsfrei eingesetzt werden.

Weitere Einzelheiten, Vorteile und Merkmale der Erfindung ergeben sich nicht nur aus den Ansprüchen, den diesen zu entnehmenden Merkmalen - für sich und/oder im Kombination -, sondern auch aus der nachfolgenden Beschreibung von der Zeichnung zu entnehmenden bevorzugten Ausführungsbeispielen sowie deren Erläuterungen.

Es zeigen:
- Fig. 1: eine Prinzipdarstellung einer Gießrinne,
- Fig. 2: ein Radialgeflecht von Rovings,
- Fig. 3: ein Werkzeug zum Radialwickeln eines Geflechtbandes und
- Fig. 4: einen Ausschnitt einer Gießrinne.

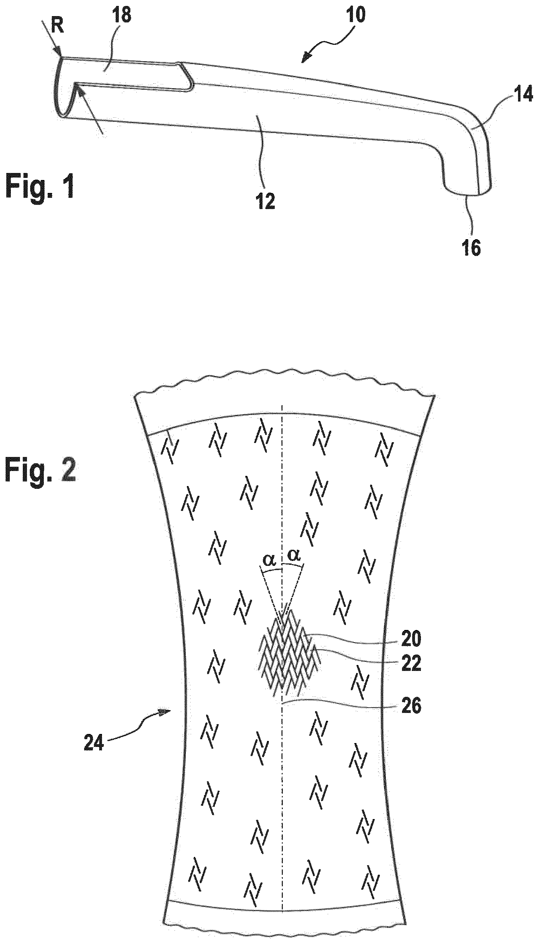

In Fig. 1 ist rein beispielhaft eine Gießrinne 10 zum fließenden Transport einer Metallschmelze, insbesondere aus Aluminium bestehend oder Aluminium enthaltend, dargestellt. Die Gießrinne 10 besteht aus einem gradlinig verlaufenden schmelzeinlassseitigen ersten Abschnitt 12 und einem gebogenen Abschnitt 14, der in einen Gießauslass 16 übergeht.

Entsprechend der zeichnerischen Darstellung ist die Gießrinne 10 weitgehend geschlossen, bildet folglich ein gebogenes Rohr, das im proximalen Bereich 18 offen ist, um von einem Schmelztiegel oder z.B. einer Warmhaltekammer oder -ofen stammende Schmelze zu einer Gießkammer, z.B. einer Druckgussanlage, bzw. einer Gießform zu transportieren. Hierzu weist die Gießrinne 10 im eingebauten Zustand einen entsprechend geneigten Verlauf auf.

Der bogenförmige Abschnitt kann einen bestimmten Krümmungswinkel aufweisen, z.B. 90°.

Der geradlinige Abschnitt 12 kann eine Länge zwischen z.B. 30mm und 2000mm aufweisen. Der Rinnendurchmesser R, also die maximale innere lichte Weite der Gießrinne 10, kann zwischen 20mm und 200mm liegen. Dabei besteht auch die Möglichkeit, dass die Weite über die Länge variiert bzw. der bogenförmige Abschnitt 14 sich zu seinem distalen Ende (Öffnung 16) hin z.B. konusförmig verjüngt.

Erfindungsgemäß besteht die Gießrinne 10 aus einem oxidkeramischen Verbundwerkstoff, umfassend oxidkeramische Fasern sowie eine oxidkeramische Matrix. Die Porosität der Gießrinne 10 kann zwischen 20% und 40% bzw. 45%, vorzugsweise zwischen 27% und 32% liegen.

Eine diesbezügliche Gießrinne ist zum Transportieren von Schmelzen, insbesondere Metallschmelzen, insbesondere Nichteisenmetallschmelzen bzw. Nichteisenmetalllegierungsschmelzen bestimmt, wobei als Metalle Al, Si, Mg, Cu, Zn, Sn, Ti, Na, Sr, B zu nennen sind.

Bevorzugterweise ist eine diesbezügliche Gießrinne 10 für Aluminiumschmelzen bzw. Aluminiumlegierungsschmelzen geeignet. In diesem Fall sollten die oxidkeramische Matrix aus Al₂O₃ und die oxidkeramischen Fasern gleichfalls aus Al₂O₃ bestehen. Die Matrix kann gegebenenfalls als Zusatz ZrO₂ oder mit Y₂O₃ verstärktes ZrO₂ enthalten.

Die Fasern der erfindungsgemäßen Gießrinne 10 bilden ein biaxiales Rund- oder Flachgeflecht, wobei die Fasern (Einzelfilamente) zu Rovings (Faserbündeln) zusammengefasst sind. Ein entsprechendes Faserhalbzeug 24 ist in Fig. 2 dargestellt, bei dem die Enden (oberer und unterer Rand) versiegelt sind, um ein Ausfransen zu vermeiden.

Beim Flechten werden die Rovingsstränge regelmäßig ineinandergeschlungen. Je nach Flechtart können die Rovingstränge unter bzw. über ein oder mehreren kreuzenden Rovings geführt werden. Die Fasern verlaufen beim Flechten niemals 90° zur Hauptproduktionsrichtung.

Ein diesbezügliches geflochtenes Faserhalbzeug 24, das eine Schlauchform oder Bandform aufweist, wird mit einem Schlicker imprägniert.

Insbesondere gelangt ein wasserbasierter Schlicker zum Einsatz mit bevorzugt organischen Additiven, z.B. Polyole, Polyvinylalkohole oder Polyvinylpyrrolidone, Dispersionsbinder, bevorzugt Polyole und Polyvinylalkohole.

Als Oxidkeramik kommt sowohl für die keramischen Partikel als auch für die Fasern insbesondere ein Material aus der Gruppe Al₂O₃, SiO₂, ZrO₂, Y₂O₃, TiO₂, CaO, MgO, mit ZrO₂ (tetragonal stabilisiert, teilstabilisiert, vollstabilisiert) in Frage.

Die keramischen Partikel bezogen auf das Gesamtvolumen des Schlickers sollte dabei 10 bis 50 Vol.-%, vorzugsweise 20 Vol.-% bis 40 Vol.-% betragen. Ferner sollte 21 bis 35 Gew.-%, bezogen auf das Gesamtgewicht der keramischen Partikel, Glycerin im Schlicker enthalten sein.

Die Rovings 20, 22 verlaufen zur Längsachse 26 (Hauptproduktionsrichtung) des Faserhalbzeugs 24 unter einem Winkel α, der vorzugsweise zwischen 25° und 55° zur Längsachse 26 bzw. Hauptproduktionsrichtung des imprägnierten Faserhalbzeug 24 des Prepregs liegt.

Entsprechend imprägnierte Rund- oder Flachgeflechte 24 (Prepreg mit geflochtener Faserarchitektur) werden radial gewickelt und dabei gestaucht und gestreckt, um sodann auf ein Werkzeug abgelegt zu werden, das die Innengeometrie der Gießrinne 10 vorgibt.

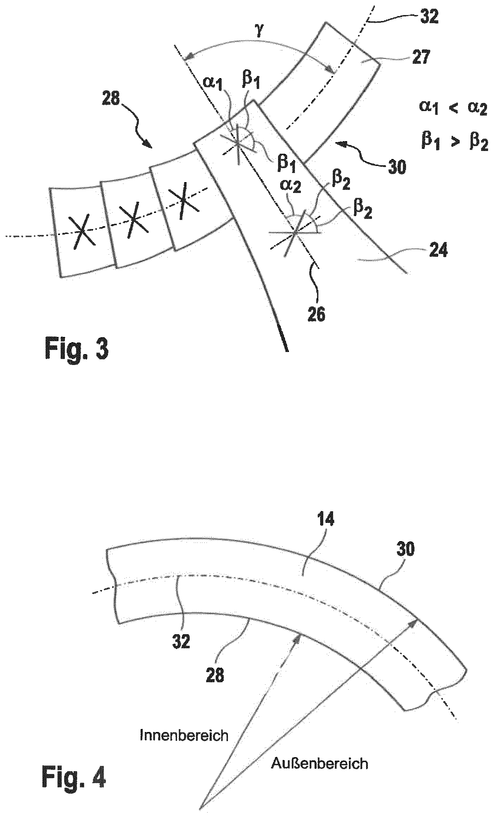

In Fig 3 ist ein Radialwickelprozess mit einem Geflechtband 24 dargestellt. Es wird mit Überlappung um einen Kern 27 gewickelt. Der sich durch Stauchen bzw. Drehen verändernde Winkel α1, α2 zur Hauptproduktionsrichtung (Längsachse 26) des Geflechts 24 ist skizziert. Der Winkel α1 zwischen Hauptproduktionsrichtung und Roving 20, 22 ist im Innenbereich 28 des Bogens geringer als der Winkel α2 im Außenbereich 30 des Bogens, da im Innenbereich das Geflecht in Hauptproduktionsrichtung gestreckt, im Außenbereich in Hauptproduktionsrichtung gestaucht wird. Entsprechend ändert sich der Winkel β, also die Verlaufsrichtung der Fasern bzw. Faserbündel (Rovings) zur Längsrichtung des Werkzeugs, das die Innengeometrie der Gießrinne abbildet. Im Innenbereich der Krümmung ist der Winkel β₁ größer als der Winkel β₂ im Außenbereich der Krümmung.

Unabhängig hiervon sollte der Winkel γ zwischen der Hauptproduktionsrichtung des Geflechts und der Längsachse des Werkzeugs und damit der Gießrinne beim radialen Wickeln zwischen 60° und kleiner 90° liegen.

Um Verdickungen im Bogeninneren 28 zu vermeiden und im erforderlichen Umfang den Außenbogen 30 des Abschnitts 14 mit den Prepregs zu bedecken, weisen diese keine Steh- oder Standfäden auf, so dass im erforderlichen Umfang ein Stauchen und Dehnen erfolgen kann.

Auch ist im erforderlichen Umfang ein Dehnen/ Stauchen des Geflechts in Hauptproduktionsrichtung möglich, so dass der den Bogenabschnitt 14 vorgebende Abschnitt des Werkzeugs mit Prepregs abgedeckt werden kann, die eine gleiche oder nahezu gleiche Wandstärke bilden.

Auch im langgestreckten, also im gradlinigen Abschnitt 12 der Gießrinne 10 können entsprechende Prepregs eingesetzt werden, gleichwenn auch ein Rundgeflecht diesen Bereich umschließen kann. Optional können auch Prepregs aus flächiger Gewebe- oder Gelegearchitektur eingesetzt werden.

Die Längsachse der Gießrinne 10 ist in der Fig. 4 mit dem Bezugszeichen 32 gekennzeichnet.

Sollen in der Gießrinne 10 besondere Strukturen ausgebildet werden, so können diese auf dem Werkzeug abgebildet werden, auf das die Prepregs abgelegt werden.

Nach Ablegen der Prepregs auf das Werkzeug können diese wie gewohnt weiterprozessiert werden, d.h. zum Beispiel im Autoklav verdichtet werden. Anschließend erfolgt ein Trocknen, Entformen sowie Sintern. Sofern erforderlich, kann ein Nachbearbeiten durchgeführt werden.

Nachfolgend folgt ein Ausführungsbeispiel für eine Gießrinne (Beispiel Gewebe- und Geflechtverstärkung):
Zunächst werden oxidkeramische Prepregs hergestellt. Dazu werden Gewebe und Geflechte aus Aluminiumoxidfasern (>99% Al₂O₃) mit einem oxidkeramische Partikel enthaltenden wasserbasierten Schlicker imprägniert. Der Filamentdurchmesser liegt bei 10µm - 12µm und die Garnfeinheit 20.000 denier. Der Schlicker hat einen Feststoffgehalt von 30 Volumen-% bestehend aus 80 Gew.-% Al₂O₃- Partikeln und 20 Gew.-% ZrO₂-Partikeln. Die mittlere Partikelgröße beträgt 1 µm. Als Dispergator werden 2 Gewichts-% Polyacrylsäure dazugegeben. Nach einer Reduzierung des Wassergehalts der infiltrieren Faserarchitektur kann das entstandene Prepreg durch Zuschneiden und Ablegen auf ein die Innenkontur der Gießrinne abbildendes Werkzeug verarbeitet werden. Dazu werden die Radialgeflechte im bogenförmigen Bereich der Gießrinne radial gewickelt. Dabei wird der Geflechtschlauch im Innenbereich (Intrados) in Hauptproduktionsrichtung gedehnt, dabei verringert sich dessen Breite, und im Außenbereich (Extrados) in Hauptproduktionsrichtung gestaucht, dadurch wird dieser verbreitert. Anschließend erfolgt eine Trocknung mittels Autoklav-Technik unter Beaufschlagung von Temperatur und Überdruck, so dass ein Grünkörper erhalten wird. Nach der Trocknung kann die aus Gewebe und Geflecht abgebildete Gießrinne vom Kern abgenommen werden. Anschließend erfolgt das Sintern bei 1200 °C. Die Nacharbeitung kann mittels Drehen, Fräsen oder Schleifen erfolgen.

## Patentansprüche

1. Gießrinne (10) zum fließenden Transport einer Schmelze, insbesondere Metallschmelze, vorzugsweise Nichteisenmetallschmelze, insbesondere einer aus Aluminium bestehenden oder Aluminium enthaltenden Schmelze,
**dadurch gekennzeichnet,**
**dass** die Gießrinne (10) aus einem oxidfaserverstärkten oxidkeramischen Verbundwerkstoff besteht oder diesen enthält, und dass die Gießrinne zumindest abschnittsweise aus mit Schlicker imprägnierten Prepregs hergestellt ist, die ein aus den Fasern gebildetes Rund- oder Flachgeflecht aufweisen, welches radial zur Längsachse der Gießrinne derart gewickelt ist, dass Hauptproduktionsrichtung des Rund- oder Flachgeflechts einen Winkel γ zur Längsachse der Gießrinne mit 60° ≤ γ < 90° einschließt.

2. Gießrinne nach Anspruch 1,
**dadurch gekennzeichnet,**
**dass** der Verbundwerkstoff oxidkeramische Fasern enthält, gebildet aus vorzugsweise zumindest einem Material aus der Gruppe Al₂O₃, SiO₂, ZrO₂, Y₂O₃, TiO₂, CaO, MgO, Y₂O₃ stabilisiertes ZrO₂, und/oder dass der Verbundwerkstoff eine oxidkeramische Matrix enthält, gebildet aus vorzugsweise zumindest einem Material aus der Gruppe Al₂O₃, SiO₂, ZrO₂, Y₂O₃, TiO₂, CaO, MgO, ZrO₂ (tetragonal stabilisiert, teilstabilisiert, vollstabilisiert), wobei vorzugsweise das Metall im Verbundwerkstoff und das der Schmelze oder Hauptbestandteil der Schmelze gleich ist.

3. Gießrinne nach Anspruch 1 oder 2,
**dadurch gekennzeichnet,**
**dass** die Matrix und die Fasern aus gleichem oxidkeramischem Material oder gleichen oxidkeramischen Materialien bestehen oder dieses bzw. diese enthalten,
vorzugsweise die Matrix und die Fasern aus Al₂O₃ bestehen oder als Hauptbestandteil enthalten.

4. Gießrinne nach zumindest einem der vorhergehenden Ansprüche,
**dadurch gekennzeichnet,**
**dass** die Oxidkeramik der Matrix als Zusatz ZrO₂ oder mit Y₂O₃ stabilisiertes ZrO₂ enthält, dessen Gewichtsanteil vorzugsweise 5 Gew.-% bis 30 Gew.-% der Oxidkeramik der Matrix, insbesondere 12 Gew.-% bis 25 Gew.-% beträgt.

5. Gießrinne nach zumindest einem der vorhergehenden Ansprüche,
**dadurch gekennzeichnet,**
**dass** die offene Porosität der Gießrinne (10) zwischen 20 % und 40 % bzw. 45%, vorzugsweise zwischen 27 % und 32 % liegt, und/oder die Dichte zwischen 2 g/cm³ und 6 g/cm³, bevorzugt zwischen 2,5 g/cm³ und 3,2 g/cm³, liegt, und/oder dass die Dichte ρ der Fasern beträgt 2 g/cm³ ≤ ρ ≤ 6 g/cm³ und/oder der Faserdurchmesser beträgt 5 µm bis 20 µm, insbesondere 10 µm bis 12 µm.

6. Gießrinne nach zumindest einem der vorhergehenden Ansprüche,
**dadurch gekennzeichnet,**
**dass** die Gießrinne zumindest abschnittsweise umlaufend geschlossen ist, vorzugsweise sowohl der gebogene Abschnitt (14) als auch zumindest ein Bereich eines gradlinigen Abschnitts (12) der Gießrinne (10) umlaufend geschlossen ausgebildet ist.

7. Gießrinne nach zumindest einem der vorhergehenden Ansprüche,
**dadurch gekennzeichnet,**
**dass** die vorzugsweise eine Wandstärke W_{D} mit 1 mm ≤ W_{D} ≤ 20 mm, insbesondere 1 mm ≤ W_{D} ≤ 3 mm, aufweisende Gießrinne (10) einen, insbesondere schmelzabflussseitig, verlaufenden gebogenen Abschnitt (14) aufweist, der aus zumindest einem, insbesondere aus mehreren mit die oxidkeramische Matrix bildenden keramischen Partikel enthaltendem Schlicker imprägnierten Pregregs besteht, wobei in dem Prepreg die oxidkeramische Fasern in Form eines Rund- oder Flachgeflechts vorliegen, das frei von Steh- oder Standfäden ist, wobei vorzugsweise der gebogene Abschnitt (14) zumindest bereichsweise durch überlappend oder auf Stoß gelegte radialgewickelte, geflochtene Prepregbänder gebildet ist, welche ggf. mehrlagig übereinander gelegt sind.

8. Gießrinne nach zumindest einem der vorhergehenden Ansprüche,
**dadurch gekennzeichnet,**
**dass** die Fasern zur Hauptproduktionsrichtung (Längsachse) des insbesondere biaxialen Geflechts einen Winkel α mit 25° ≤ | α | ≤ 55° einschließen und/oder dass die Fasern zur Hauptproduktionsrichtung des Rund- oder Flachgeflechts einen Winkel β1,β2 ≠ 0°, 90° zur Längsachse des Werkzeugs, insbesondere einen Winkel β1,β2 mit 35° ≤ | β1,β2 | ≤ 65° einschließen.

9. Verfahren zur Herstellung einer Gießrinne (10) zum fließenden Transport einer Schmelze, wie Metallschmelze, vorzugsweise Nichteisenmetallschmelze, insbesondere Aluminiumschmelze oder einer Aluminium enthaltenden Schmelze, umfassend die Verfahrensschritte
- Imprägnieren einer Anordnung von Rund- oder Flachgeflechten von oxidkeramischen Fasern mit einem oxidkeramische Partikel enthaltenden Schlicker zur Bildung von Prepregs,
- Wickeln oder Legen der Prepregs auf ein Innengeometrie der Gießrinne abbildendes Werkzeug, wobei Hauptproduktionsrichtung des Rund- oder Flachgeflechts eine Winkel γ zur Längsachse des Werkzeugs mit 60° ≤ γ < 90° einschließt.
- Trocknen der auf dem Werkzeug abgelegten Anordnung, Entformen oder Teilentfonnen und Sintern.

10. Verfahren nach Anspruch 9,
**dadurch gekennzeichnet,**
**dass** die Anordnung nach dem Sintern ggf. nachbearbeitet wird.

11. Verfahren nach Anspruch 9 oder 10,
**dadurch gekennzeichnet,**
**dass** die Anordnung der Fasern bei einer Temperatur zwischen 40 °C und 250 °C, insbesondere zwischen 80 °C und 150 °C getrocknet wird, und/oder dass die Anordnung der Fasern bei einer Temperatur zwischen 1.000 °C und 1.300 °C, insbesondere zwischen 1.150 °C und 1.250 °C, gesintert wird.

12. Verfahren nach einem der Ansprüche 9 bis 11,
**dadurch gekennzeichnet,**
**dass** in Längsrichtung der Gießrinne (10) betrachtet maximale lichte Weite der Gießrinne bereichsweise variiert wird.

13. Verfahren nach einem der Ansprüche 9 bis 12,
**dadurch gekennzeichnet,**
**dass** das Rund- oder Flachgeflecht beim Umfangswickeln in einem gebogenen Abschnitt (14) der Gießrinne (10) außenseitig gedehnt und innenseitig gestaucht wird.

14. Verfahren nach einem der Ansprüche 9 bis 13,
**dadurch gekennzeichnet,**
**dass** mehrere imprägnierte Rund- oder Flachgeflecht-Prepregs nacheinander auf das Werkzeug radialgewickelt/abgelegt und drapiert werden und sodann als Einheit verdichtet werden.

## Claims

1. A runner (10) for flowing transport of a molten material, in particular of a molten metal, preferably of a molten non-ferrous metal, in particular of a molten material consisting of or containing aluminium,
**characterized in**
**that** the runner (10) consists of or contains an oxide-fiber-reinforced oxide ceramic composite material, and that the runner is made at least in some sections of prepregs impregnated with slip and having a round or flat mesh formed from the fibers, which is wound radially to the longitudinal axis of the runner such that the main production direction of the round or flat mesh is at an angle γ of 60° ≤ γ ≤ 90° to the longitudinal axis of the runner.

2. The runner according to claim 1,
**characterized in**
**that** the composite material contains oxide ceramic fibers formed from preferably at least one material from the group Al₂O₃, SiO₂, ZrO₂, Y₂O₃, TiO₂, CaO, MgO, Y₂O₃-stabilized ZrO₂, and/or that the composite material contains an oxide ceramic matrix formed from preferably at least one material from the group Al₂O₃, SiO₂, ZrO₂, Y₂O₃, TiO₂, CaO, MgO, ZrO₂ (tetragonally stabilized, partially stabilized, fully stabilized), wherein the metal in the composite material and that of the molten material or the main component of the molten material are preferably identical.

3. The runner according to claim 1 or 2,
**characterized in**
**that** the matrix and the fibers consist of or contain the same oxide ceramic material(s), with the matrix and the fibers preferably consisting of Al₂O₃ or containing it as the main component.

4. The runner according to at least one of the preceding claims,
**characterized in**
**that** the oxide ceramic of the matrix contains as an additive ZrO₂ or ZrO₂ stabilized with Y₂O₃, whose proportion by weight is preferably 5 % by wt. to 30 % by wt. of the oxide ceramic of the matrix, in particular 12 % by wt. to 25 % by wt.

5. The runner according to at least one of the preceding claims,
**characterized in**
**that** the open porosity of the runner (10) is between 20 % and 40 % or 45%, preferably between 27 % and 32 %, and/or the density is between 2 g/cm³ and 6 g/cm³, preferably between 2.5 g/cm³ and 3.2 g/cm³, and/or that the density ρ of the fibers is 2 g/cm³ ≤ ρ ≤ 6 g/cm³ and/or the fiber diameter is 5 µm to 20 µm, in particular 10 µm to 12 µm.

6. The runner according to at least one of the preceding claims,
**characterized in**
**that** the runner is closed all round at least in some sections, with preferably both the curved section (14) and at least one area of a straight section (12) of the runner (10) being designed closed all round.

7. The runner according to at least one of the preceding claims,
**characterized in**
**that** the runner (10), preferably having a wall thickness Woof 1 mm ≤ W_{D} ≤ 20 mm, in particular 1 mm ≤ W_{D} ≤ 3 mm, has a curved section (14), in particular extending on the molten material outflow side, which consists of at least one, in particular of a plurality of prepregs impregnated with slip containing the ceramic particles forming the oxide ceramic matrix, wherein the oxide ceramic fibers in the prepreg are provided in the form of a round or flat mesh free of warp or standing threads, wherein the curved section (14) is preferably formed at least in some areas by overlapping or abutting prepreg tapes radially wound and meshed and where necessary placed one above the other in multiple layers.

8. The runner according to at least one of the preceding claims,
**characterized in**
**that** the fibers are at an angle α of 25° ≤ | α | ≤ 55° to the main production direction (longitudinal axis) of the in particular biaxial mesh and/or that the fibers in the main production direction of the round or flat mesh are at an angle β1,β2 ≠ 0°, 90°, in particular at an angle β1,β2 of 35° ≤ | β1,β2 | ≤ 65°, to the longitudinal axis of the die.

9. A method for producing a runner (10) for flowing transport of a molten material, such as a molten metal, preferably of a molten non-ferrous metal, in particular of molten aluminium or of a molten material containing aluminium, comprising the method steps
- Impregnation of an arrangement of round or flat meshes of oxide ceramic fibers with a slip containing oxide ceramic particles for forming prepregs,
- Winding or laying of the prepregs onto a die reproducing the inner geometry of the runner, wherein the main production direction of the round or flat mesh is at an angle γ of 60° ≤ γ ≤ 90° to the longitudinal axis of the die.
- Drying of the arrangement laid on the die, full or partial removal from the mould and sintering.

10. The method according to claim 9,
**characterized in**
**that** the arrangement is where necessary reworked after sintering.

11. The method according to claim 9 or 10,
**characterized in**
**that** the arrangement of fibers is dried at a temperature between 40 °C and 250 °C, in particular between 80 °C and 150 °C, and/or that the arrangement of fibers is sintered at a temperature between 1000 °C and 1300 °C, in particular between 1150 °C and 1250 °C.

12. Method according to any of claims 9 to 11,
**characterized in**
**that** when viewed in the longitudinal direction of the runner (10), the maximum clear width of the runner is varied in some areas.

13. Method according to any of claims 9 to 12,
**characterized in**
**that** the round or flat mesh is, during circumferential winding, stretched on the outside and compressed on the inside in a curved section (14) of the runner (10).

14. Method according to any of claims 9 to 13,
**characterized in**
**that** a plurality of impregnated round or flat mesh prepregs are radially wound/laid and draped one after the other onto the die and then compressed as one unit.

## Revendications

1. Canal de coulée (10) pour le transport fluide d'une matière fondue, en particulier d'une matière fondue métallique, de préférence d'une matière fondue métallique non ferreuse, en particulier d'une matière fondue constituée d'aluminium ou contenant de l'aluminium,
**caractérisé en ce,**
**que** le canal de coulée (10) est constitué d'un matériau composite en céramique d'oxyde renforcé par des fibres d'oxyde ou contient ce dernier et que le canal de coulée est fabriqué au moins sur certaines sections de préimprégnés imprégnés de barbotine présentant un treillis rond ou plat formé à partir des fibres, lequel est enroulé radialement par rapport à l'axe longitudinal du canal de coulée, de telle sorte que la direction principale de production du treillis rond ou plat inclut un angle γ par rapport à l'axe longitudinal du canal de coulée avec 60° ≤ γ ≤ 90°.

2. Canal de coulée selon la revendication 1,
**caractérisé en ce,**
**que** le matériau composite contient des fibres de céramique d'oxyde, formées de préférence d'au moins un matériau du groupe Al₂O₃, SiO₂, ZrO₂, Y₂O₃, TiO₂, CaO, MgO, ZrO₂ stabilisé avec du Y₂O₃ et/ou que le matériau composite contient une matrice en céramique d'oxyde, formée de préférence d'au moins un matériau du groupe Al₂O₃, SiO₂, ZrO₂, Y₂O₃, TiO₂, CaO, MgO, ZrO₂ (stabilisé de manière tétragonale, partiellement stabilisé, entièrement stabilisé), sachant que le métal dans le matériau composite et celui de la matière fondue ou du composant principal de la matière fondue est de préférence le même.

3. Canal de coulée selon la revendication 1 ou 2,
**caractérisé en ce,**
**que** la matrice et les fibres sont constituées du même matériau en céramique d'oxyde ou des mêmes matériaux en céramiques d'oxyde ou qu'elles en contiennent, que la matrice et les fibres sont constituées de préférence d'Al₂O₃ ou en contiennent comme composant principal.

4. Canal de coulée selon au moins l'une des revendications précédentes,
**caractérisé en ce,**
**que** la céramique d'oxyde de la matrice contient comme additif du ZrO₂ ou du ZrO₂ stabilisé avec du Y₂O₃, dont la proportion en poids s'élève de préférence entre 5 % à 30 % en poids de la céramique d'oxyde de la matrice, en particulier entre 12 % et 25 % en poids.

5. Canal de coulée selon au moins l'une des revendications précédentes,
**caractérisé en ce,**
**que** la porosité ouverte du canal de coulée (10) se situe entre 20 % et 40 % ou 45 %, de préférence entre 27 % et 32 %, et/ou que la masse volumique se situe entre 2 g/cm³ et 6 g/cm³, de préférence entre 2,5 g/cm³ et 3,2 g/cm³, et/ou que la masse volumique ρ des fibres s'élève à 2 g/cm³ ≤ ρ ≤ 6 g/cm³ et/ou que le diamètre des fibres s'élève entre 5 µm et 20 µm, en particulier entre 10 µm et 12 µm.

6. Canal de coulée selon au moins l'une des revendications précédentes,
**caractérisé en ce,**
**que** le canal de coulée est fermé sur sa périphérie au moins sur certaines sections, de préférence que la section courbée (14) et au moins une zone d'une section rectiligne (12) du canal de coulée (10) sont fermées sur leur périphérie.

7. Canal de coulée selon au moins l'une des revendications précédentes,
**caractérisé en ce,**
**que** le canal de coulée, présentant de préférence une épaisseur de paroi W_{D} de 1 mm ≤ W_{D} ≤ 20 mm, en particulier de 1 mm ≤ W_{D} ≤ 3 mm, présente une section courbée (14) s'étendant en particulier du côté de l'évacuation de la matière fondue et qui est constituée d'au moins un préimprégné, en particulier de plusieurs préimprégnés imprégnés de barbotine contenant des particules céramiques formant la matrice en céramique d'oxyde, sachant que les fibres en céramique d'oxyde sont présentes dans le préimprégné sous la forme d'un treillis rond ou plat qui est exempt de fils de soutien ou fixes, sachant que la section courbée (14) est de préférence formée au moins sur certaines sections par des bandes de préimprégné tressées, enroulées radialement et posées en chevauchement ou bout à bout, lesquelles sont éventuellement superposées en plusieurs couches.

8. Canal de coulée selon au moins l'une des revendications précédentes,
**caractérisé en ce,**
**que** les fibres forment un angle α par rapport à la direction principale de production (axe longitudinal) du treillis, en particulier biaxial, avec 25° ≤ | α | ≤ 55° et/ou que les fibres dans la direction principale de la production du treillis rond ou plat forment un angle β1,β2 ≠ 0°, 90° par rapport à l'axe longitudinal du moule, en particulier un angle β1,β2 avec 35° ≤ | β1,β2 | < 65°.

9. Procédé de fabrication d'un canal de coulée (10) pour le transport fluide d'une matière fondue, telle qu'une matière fondue métallique, de préférence d'une matière fondue métallique non ferreuse, en particulier d'une matière fondue d'aluminium ou contenant de l'aluminium, comprenant les étapes de procédé suivantes
- Imprégnation d'une configuration de treillis ronds ou plats de fibres de céramique d'oxyde avec une barbotine contenant des particules de céramique d'oxyde pour la formation des préimprégnés,
- Enroulement ou dépôts des préimprégnés sur un moule reproduisant la géométrie interne du canal de coulée, sachant que la direction principale de la production du treillis rond ou plat forme un angle γ par rapport à l'axe longitudinal du moule avec 60° < γ ≤ 90°.
- Séchage de la configuration déposée sur le moule, démoulage ou démoulage partiel et frittage.

10. Procédé selon la revendication 9,
**caractérisé en ce,**
**que** la configuration est éventuellement retravaillée après le frittage.

11. Procédé la revendication 9 ou 10,
**caractérisé en ce,**
**que** la configuration des fibres est séchée à une température comprise entre 40 °C et 250 °C, en particulier entre 80 °C et 150 °C, et/ou que la configuration des fibres est frittée à une température comprise entre 1 000 °C et 1 300 °C, en particulier entre 1 150 °C et 1 250 °C.

12. Procédé selon l'une des revendications 9 à 11,
**caractérisé en ce,**
**que**, vu dans le sens longitudinal du canal de coulée (10), le diamètre intérieur maximal du canal de coulée varie selon les zones.

13. Procédé selon l'une des revendications 9 à 12,
**caractérisé en ce,**
**que**, lors de l'enroulement périphérique dans une section courbée (14) du canal de coulée (10), le treillis rond ou plat est étiré du côté extérieur et comprimé du côté intérieur.

14. Procédé selon l'une des revendications 9 à 13,
**caractérisé en ce,**
**que** plusieurs préimprégnés de treillis rond ou plat sont enroulés radialement /déposés et drapés les uns après les autres sur le moule, puis sont ensuite compactés sous forme d'unité.
